# EUROPÄISCHE PATENTSCHRIFT

(11) **EP 0 728 086 B1**
(45) Veröffentlichungstag und Bekanntmachung des Hinweises auf die Patenterteilung: **10.02.1999**
(21) Anmeldenummer: 94931512.1
(22) Anmeldetag: 09.11.1994
(51) Int. Cl.: B60T 8/88, B60R 16/02

(54) **ELEKTRONISCHES BREMSSYSTEM**
ELECTRONIC BRAKING SYSTEM
SYSTEME DE FREINAGE ELECTRONIQUE

(30) Priorität: 19.11.1993 DE 4339570
(43) Veröffentlichungstag der Anmeldung: 28.08.1996
(73) Patentinhaber: ROBERT BOSCH GMBH, 70442 Stuttgart (DE)
(72) Erfinder: SCHLAGMÜLLER, Walter, D-71701 Schwieberdingen (DE); SCHRAMM, Dieter, D-70469 Stuttgart (DE); SCHUBERT, Peter, D-74321 Bietigheim-Bissingen (DE); BINDER, Jürgen, D-70599 Stuttgart (DE); HEINSOHN, Rainer, D-71732 Tamm (DE); KELLER, Frieder, D-75015 Bretten (DE); SCHOCH, Eberhard, D-71706 Markgröningen (DE); AUPERLE, Bernd, D-71711 Steinheim (DE); KELLNER, Andreas, D-71732 Tamm (DE); HOLL, Eberhard, D-71701 Schwieberdingen (DE); BLESSING, Peter, D-74078 Heilbronn (DE)
(86) Internationale Anmeldenummer: DE9401314
(87) Internationale Veröffentlichungsnummer: WO9513946

(56) Entgegenhaltungen:
- EP-A- 0 110 217
- EP-A- 0 216 372
- DE-A- 4 039 005
- DE-A- 4 126 449
- A.T.Z, Bd.88, Nr.7/8, August 1986, STUTTGART ,DE Seiten 407 - 413 BANTLE ET AL. 'DER PORSCHE TYP 959 - GRUPPE B- EIN BESONDERES AUTOMOBIL TEIL 3'

## Beschreibung

### Stand der Technik

Ein elektronisches Bremssystem ist aus der DE 40 22 671 A1 bekannt.

Aus der DE 40 39 005 A1 ist ein Fahrzeugsteuersystem bekannt, bei welchem unter einer Zentralsteuereinheit sogenannte SubHauptsteuereinheiten angeordnet sind. Zentralsteuereinheit und Sub-Hauptsteuereinheiten lesen parallel Fahrerwunsch- und Sensorsignale ein und übermitteln die Fahrerwunschwerte an die Steuereinheiten der einzelnen Steuersysteme (Motor, Getriebe, Bremsanlage, etc.) . Die Sub-Hauptsteuerungen sind dabei derart aufgebaut, daß sie auch bei Ausfall der zentralen Steuereinheit bzw. des Übertragungssystems ihre Funktionen voll durchführen. Ein Notlaufbetrieb für eine elektrisch steuerbare Bremsanlage wird nicht beschrieben.

Aus der DE 41 26 449 A1 ist ein Steuersystem mit mehreren Steuereinheiten beschrieben, die über ein Kommunikationssystem miteinander verbunden sind. Von jeder Steuereinheit ist dabei in einer anderen ein Ersatzprogramm zur Durchführung ihrer Funktion gespeichert, auf das im Fehlerfall dieser Steuereinheit umgeschaltet wird. Hinweise auf eine Notlaufstrategie für ein elektronisches Bremssystem werden nicht gegeben.

### Vorteile der Erfindung

Die Erfindung führt zu einem elektronischen Bremssystem, das eine günstige Notlaufstrategie aufweist.

### Figurenbeschreibung

Anhand der Zeichnung wird ein Ausführungsbeispiel der Erfindung beschrieben.

Dabei zeigt Figur 1 ein Übersichtsblockschaltbild einer bevorzugten Ausführungsform des elektronischen Bremssystems, während in den Figuren 2 und 3 die erfindungsgemäße Notlaufstrategie anhand von Flußdiagrammen verdeutlicht ist.

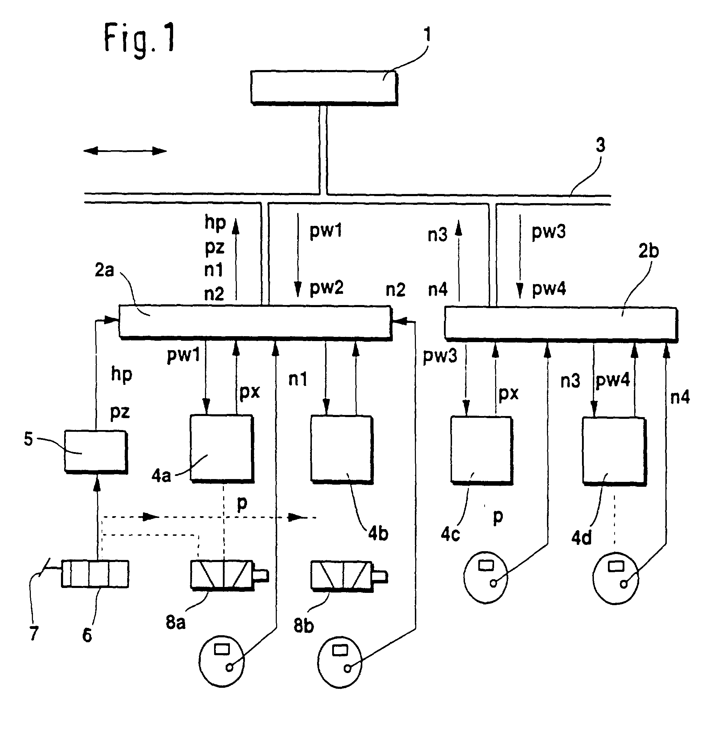

Die Figur 1 zeigt ein dezentrales elektronisches Bremssystem, das ein Zentralmodul 1 und Bremsmodule 2a und 2b aufweist. Das Zentralmodul hat die Aufgabe ABS-ASR-Berechnungen durchzuführen, ist für die Bremskraftverteilung zuständig und ermittelt die radspezifischen Bremsdrucksollwerte pw1 bis pw4. Es kann von ihm aus eine zentrale Überwachung erfolgen. Das Zentralmodul 1 kann z.B. ein Mikrorechner mit Busschnittstelle sein. Er selbst ist nicht mit Sensoren oder Aktuatoren direkt verbunden. In einem bevorzugten Ausführungsbeispiel ist das Zentralmodul redundant ausgeführt.

Die Verbindung zwischen Zentralmodul 1 und den Bremsmodulen 2a und 2b ist z.B. ein vorzugsweise serielles Bussystem. 3 (z.B. CAN). Bei redundanter Realisierung des Zentralmoduls 1 wird eine ebenfalls redundante Realisierung des Bussystems 3 gewählt.

Das Bremsmodul 2b ist eine autonome Einheit, die die radspezifischen Bremswerte einer Achse, vorzugsweise der Hinterachse oder eines Bremskreises einregelt. Dem Modul 2b werden die Radgeschwindigkeiten n₃ und n₄ der zugehörigen Räder zugeführt und von hier aus dann dem Zentralmodul zugeführt. Außerdem ist es Aufgabe dieses Moduls die radindividuellen Bremsdrücke einzuregeln. Hierzu werden die Istwerte der Bremsdrücke pₓ erfaßt. Signale iw steuern entsprechende Aktuatoren 4c und 4d zur Einsteuerung des Sollbremsdrucks an den Bremsen. Anstelle des Bremsdrucks kann auch eine andere den Bremsdruck bestimmende Größe (z.B. Strom, Drehzahl oder Drehwinkel eines den Aktuator betätigenden Motors) ermittelt werden. Das Bremsmodul 2b ist eine intelligente Einheit mit Schnittstelle zum Kommunikationssystem basierend auf einem vorzugsweise redundant ausgeführten Mikrorechner. Bei einer redundanten Realisierung werden vorzugsweise die für die Bremsung eines Rades erforderlichen Teilfunktionen auf je einen Kanal des Rechnersystems mit gegenseitiger Überwachung der Kanäle aufgeteilt.

Auch die Leistungselektronik zur Ansteuerung der nachgeschalteten elektrisch betätigten Aktuatoren ist in dem Modul 2b enthalten.

Das Bremsmodul 2a führt die gleichen Funktionen wie das Bremsmodul 2b aus. Es ist der Vorderachse zugeordnet. Zusätzlich ist es noch mit einem Pedalsensor 5 verbunden, der den Fahrerwunsch redundant erfaßt (Weg hp des Pedals 7 und davon im Zylinder 6 erzeugter Druck pz). Auch eine Pedalkraftmessung wäre denkbar.

Auch das Modul 2a ist eine intelligente Einheit auf der Basis eines vorzugsweise redundant ausgeführten Mikrorechners. Bei redundanter Realisierung werden die für die Bremsung der Räder erforderlichen Funktionen auf zwei Kanäle aufgeteilt und es erfolgt eine gegenseitige Überwachung. Bei Ausfall des Zentralmoduls kann das Modul 2a auch gewisse Diagnosefunktionen übernehmen.

Der von den Aktuatoren 4a und 4b erzeugte Druck p wird über je eine Umschalteeinheit 8a bzw. 8b den Radbremsen zugeführt. Im Normalbetrieb sind die Umschalteeinheiten angesteuert, so daß zwischen den Aktuatoren 4 und den Radbremsen Verbindung besteht.

Der Bremskreis, dem das Modul 2a zugeordnet ist, ist noch mit einem Hydraulik-Back-Up versehen. Das Bremspedal 7 ist mit einem Hauptbremszylinder 6 verbunden. Bei abgefallenen Umschalteeinheiten 8 kann damit Druck in den Radbremszylindern eingesteuert werden. Der Zentraleinheit 1 werden normalerweise die Raddrehzahlen n und die Pedalsensorsignale hp und pz zugeführt.

Im Normalbetrieb wird also das den Fahrerwunsch repräsentierende Pedalsensorsignale hp und pz vom Modul 2a über das Kommunikationssystem an das Zentralmodul 1 übermittelt. Dort wird der Fahrerwunsch aufgrund von vorgegebenen Kennlinien in Solldruckwerte für jede Radbremse umgewandelt. Diese solldruckwerte werden über das Kommunikationssystem dem Bremsmodul 2a für die Bremsen der Vorderachse und dem Bremsmodul 2b für die Bremsen der Hinterachse zugeführt. Die Bremsmodule 2a und 2b regeln dann die vorgegebenen Sollbremsdrücke im Rahmen eines Druckregelkreises ein. Bei der Bestimmung der solldrücke aus dem Fahrerwunsch werden dabei verschiedene Faktoren wie Bremskraftverteilung, Kurvenfahrt, unterschiedliche Anlegedrücke der einzelnen Radbremsen, etc. berücksichtigt.

Für die redundante Realisierung der Module stehen verschiedene Ausführungsformen zur Verfügung. In einem bevorzugten Ausführungsbeispiel wird der im jeweiligen Modul enthaltene Mikrorechner zweikanalig aufgebaut. Dies bedeutet, daß der Mikrorechner aus zwei zueinander redundanten Rechnerkernen besteht, welche unabhängig voneinander die zugeordneten Funktionen berechnen. Im bevorzugten Ausführungsbeispiel werden die Berechnurgsfunktionen von jeweils beiden Rechnerkernen durchgeführt und anhand des Ergebnisses aus beiden Rechnerkernen eine Fehlfunktion des jeweiligen Moduls abgeleitet. In einem anderen vorteilhaften Ausführungsbeispiel weisen die Module jeweils zwei zueinander redundante Mikrorechner auf, wobei ein Hauptrechner als einkanaliger Mikrorechner vom zweiten redundanten Mikrorechner überwacht wird. Durch Vergleich wenigstens eines der Rechenergebnisse der beiden Rechner wird auch in diesem Ausführungsbeispiel eine mögliche Fehlfunktion des jeweiligen Moduls abgeleitet.

Bei dieser Auslegung ergibt sich folgende Notlaufstrategie:

Fällt das Zentralmodul 1 aus oder weist einen Fehler auf, so übernimmt das Bremsmodul 2a dessen Arbeit teilweise. Es ermittelt alle Sollbremsdrücke pw und übermittelt zwei davon an das Modul 2b. Der ABS- und ASR-Betrieb wird nicht aufrechterhalten. Die Bremsmodule 2a und 2b können den Ausfall des Zentralmoduls unabhängig voneinander durch Auswertung der zyklisch eintreffenden Statusmeldungen des Zentralmoduls erkennen.

Fällt das Kommunikationssystem aus oder zeigt es Fehlverhalten, so wird mittels des Moduls 2a der Bremsdruck an den beiden Vorderrädern eingeregelt. Das Modul 2b schaltet sich ab. Hier wird der Ausfall durch Ausbleiben der Statusbozschaft erkannt.

Tritt ein Fehler an der Pedalsensorik auf, so erfolgt Umschaltung auf das hydraulische Back-Up, d.h. die Umschalteinheiten gehen in den gezeigten Zustand. Das Bremsmodul 2a ermittelt die vom Back-Up erzeugten Druckistwerte px, führt sie dem Zentralmodul zu, der sie als Vorgabewerte für die Ermittlung der Drucksollwerte für die dem Modul 2b zugeordneten Bremsen wertet.

Fällt das Modul 2a selbst aus oder tritt in ihm ein signifikanter Fehler auf, so wird das hydraulische Back-Up wirksam. Die Fehlererkennung erfolgt durch Vergleich der Signale der redundanten Verarbeitungskanäle.

Tritt ein Fehler in den nachgeschalteten Baugruppen des Mikrorechners auf (z.B. in der Leistungselektronik) wird ebenfalls auf hydraulisches Back-Up umgeschaltet. Die Funktion des Bremsmoduls 2b bleibt erhalten.

Tritt ein Fehler oder Ausfall im Bremsmodul 2b auf, so erfolgt seine Abschaltung.

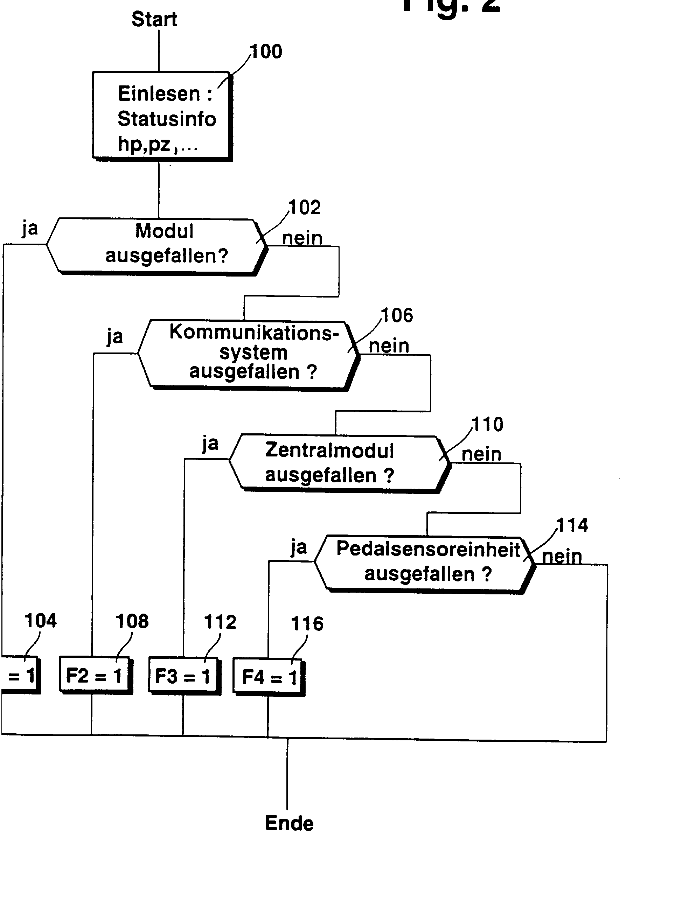

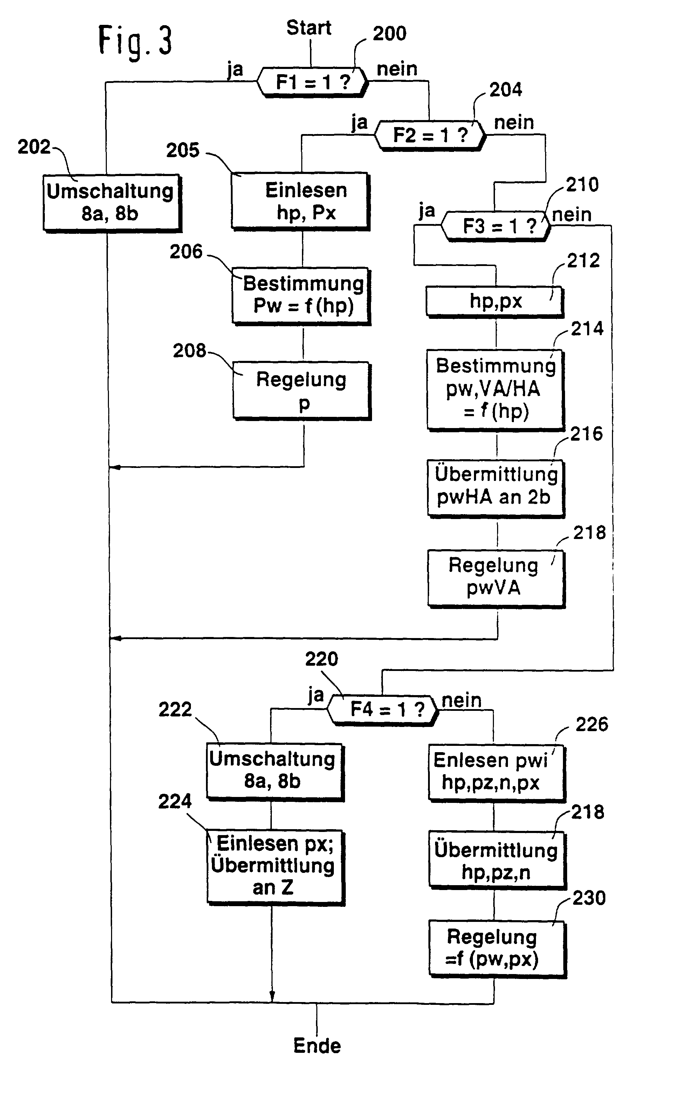

Diese Notlaufstrategie ist anhand eines im Modul 2a ablaufenden Programmteils in den Flußdiagrammen der Figur 2 und 3 skizziert. Dabei zeigt Figur 2 die Vorgehensweise zur Fehlererkennung, während in Figur 3 die bei auftretenden Fehlern ergriffenen Notlaufmaßnahmen dargestellt sind.

Nach Start des in Figur 2 dargestellten Programmteils zu vorgegebenen Zeitpunkten wird in einem ersten Schritt 100 die vom Zentralmodul an das Bremsmodul 2a über das Kommunikationssystem übermittelte Statusinformation sowie der Pedalweg hp und der im Zylinder 6 erzeugte Druck pz eingelesen. Desweiteren werden im Schritt 100 verschiedene Rechenergebnisse, beispielsweise ein Maß für die Regelabweichung zwischen Soll- und Istdruck, das aufgrund der Regelabweichung berechnete Ansteuersignal für die jeweilige Radbremse, etc. der beiden Rechnerkerne bzw. Rechner eingelesen. Wenigstens eines dieser Rechenergebnisse wird im schritt 212 mit dem vom anderen Rechnerkern bzw, Rechner ermittelten verglichen, wobei bei signifikanter Abweichung der Rechenergebnisse von einem Fehler des Moduls 2a ausgegangen wird (Schritt 102) Ferner findet eine Überprüfung der Leistungselektronik des Moduls statt. Wurde das Modul 2a als ausgefallen erkannt, so wird im Schritt 104 eine Flagge f1 auf den Wert 1 gesetzt. Hat der Vergleich der Rechenergebnisse die korrekte Funktion des Moduls 2a ergeben, wird im darauffolgenden Schritt 106 überprüft, ob das Bussystem 3 ausgefallen ist. Dies erfolgt durch Überprüfung der vom Zentralmodul zum Bremsmodul 2a übermittelten Statusinformation. Wird vom Bremsmodul 2a keinerlei Status information empfangen, wird von einem Fehler des Bussystems ausgegangen. In diesem Fall wird gemäß Schritt 108 eine Flagge f2 auf den Wert 1 gesetzt. Wird vom Bremsmodul 2a eine Status information empfangen, wird im Schritt 110 überprüft, ob das Zentralmodul einen Fehler aufweist. Zur Fehlererkennung sendet das Zentralmodul zu vorgegebenen Zeitpunkten bzw. in vorgegebenen Zeitabständen die Statusinformation an die Bremsmodule. Wird vom Bremsmodul 2a die Statusinformation nicht korrekt empfangen, weist sie beispielsweise einen falschen Pegel auf oder wird sie zum falschen Zeitpunkt empfangen, wird von einem Fehler im Zentralmodul 1 ausgegangen. In diesem Fall wird die Flagge f3 auf den Wert 1 gesetzt (Schritt 112). Arbeitet das Zentralmodul offensichtlich fehlerfrei, wird im Schritt 114 überprüft, ob die Pedalsensoreinheit korrekte Meßergebnisse liefert. Dies erfolgt im Schritt 114 durch Vergleich der Werte für den Pedalweg hp und dem Druck pz. Stimmen diese Werte im Rahmen von Toleranzen überein, wird von einer korrekten Funktion der Pedalsensoreinheit ausgegangen und der fehlerfreie Betrieb des Bremssystems angenommen. Im gegenteiligen Fall wird von einem Ausfall der Pedalsensoreinheit ausgegangen und im Schritt 116 eine Flagge f4 auf 1 gesetzt. Nach den Schritten 104, 108, 112, 114 und 116 wird der Programmteil beendet und zu gegebener Zeit wiederholt.

Die im jeweiligen Fehlerfall ergriffenen Notlaufmaßnahmen sind anhand des Flußdiagramms nach Figur 3 beschrieben. Auch hier wird der gezeigte Programmteil zu vorgegebenen Zeitpunkten gestartet. In einem ersten Schritt 200 wird überprüft, ob die Flagge fl den Wert 1 aufweist, das heißt, ob ein Fehler im Bremsmodul 2a erkannt wurde. Ist dies der Fall, wird gemäß Schritt 202 ein Umschaltsignal für die Umschaltventile 8a und 8b erzeugt und die hydraulische Bremsung der Vorderachse eingeleitet. Danach wird der Programmteil beendet und zu gegebener Zeit wiederholt.

Ist die Flagge 1 auf dem Wert 0, das heißt wird das Modul 2a als funktionstüchtig angenommen, wird im Schritt 204 die Flagge 2 überprüft, ob sie den Wert 1 angenommen hat. Ist dies der Fall, so wird davon ausgegangen, daß das Kommunikationssystem ausgefallen ist. Das Bremsmodul 2a ermittelt daher die Solldruckwerte für die zugeordneten Räder und regelt diese ein. Daher wird im Schritt 204 der Pedalweg hp sowie die Istdrücke in den Rädern pxi eingelesen. Danach wird im Schritt 206 die einzelnen Radsollwerte pwi auf der Basis des Pedalwegs und ggf. anderer Parameter bestimmt. Daraufhin wird im Schritt 208 der jeweilige Istdruck im Sinne einer Angleichung an den vorgegebenen Solldruck für jedes Rad eingeregelt. Danach wird der Programmteil beendet.

Weist die Flagge 2 nicht den Wert 1 auf, so wird im Abfrageschritt 210 die Funktionsfähigkeit des Zentralmoduls anhand der dritten Flagge überprüft. Weist diese den Wert 1 auf, wird von einem ausgefallenen Zentralmodul ausgegangen, worauf des Bremsmodul 2a im Schritt 212 Pedalweg hp und die Istdruckwerte der Radbremsen pxi einliest. Daraufhin werden gemäß Schritt 214 die Sollwerte pwVAi für die Radbremsen der Vorderachse sowie die Drucksollwerte pwHAi für die Radbremsen der Hinterachse auf der Basis des Pedalwegs hp sowie ggf. weiterer Betriebsgrößen bestimmt. Im darauffolgenden Schritt 216 werden die Solldruckwerte für die Radbremsen der Hinterachse über das Kommunikationssystem an das Bremsmodul 2b übermittelt und im Schritt 218 der Druck in den Radbremsen der Vorderachse jeweils auf den vorgegebenen Sollwert eingeregelt. Danach wird der Programmteil beendet. Wurde im Schritt 210 festgestellt, daß die Flagge 3 nicht den Wert 1 aufweist, wird im Abfrageschritt 220 die Flagge 4 auf den Wert 1 überprüft. Weist sie den Wert 1 auf, so wird von einer ausgefallenen Pedalsensoreinheit ausgegangen, worauf im Schritt 222 die Umschaltung der Magnetventile 8a und 8b vorgenommen wird. Dadurch wird eine hydraulische Bremsung der Vorderachsbremsen abhängig von der Pedalbetätigung ermöglicht. In dem, auf den Schritt 222 folgenden Schritt 224 werden die Istdruckwerte in den Radbremsen pxi eingelesen und an das Zentralmodul übermittelt. Danach wird der Programmteil beendet.

Wurde im Schritt 220 festgestellt, daß auch die Flagge 4 nicht den Wert 1 aufweist, ist vom fehlerfreien Betrieb der Bremsanlage auszugehen. Daher wird im Schritt 226 die vom Zentralmodul übermittelten Solldruckwerte für die Radbremsen, der Pedalweg hp, der Pedaldruck pz, die Raddrehzahlen ni der Vorderachsräder sowie die Istdrücke pxi der Radbremsen der Vorderachse eingelesen. Daraufhin wird im Schritt 228 Pedalweg hp, Druck pz sowie die Raddrehzahlen an das Zentralmodul übermittelt und im darauffolgenden Schritt 230 die Bremsdrücke in den einzelnen Radbremsen gemäß den vorgegebenen, vom Zentralmodul übermittelten Sollwerten eingeregelt. Danach wird der Programmteil beendet und zu gegebener Zeit wiederholt.

Entsprechende Programmschritte laufen im Bremsmodul 2b ab. Dort wird das Modul bei einem Fehler im Modul selbst und bei Ausfall des Kommunikationsystems, was durch entsprechende Maßnahmen erkannt wird, abgeschaltet. Eine Bremsung der Hinterachse findet dann allenfalls über das hydraulische Bremsystem statt. Bei Ausfall des Zentralmodul und bei Ausfall der Pedalsensoreinheit liest das Bremsmodul 2b die Drucksollwerte für die zugeordneten Radbremsen vom Bremsmodul 2a ein und Regelung den Druck in den Radbremsen ein.

Neben der im bevorzugten Ausführungsbeispiel vorgenommenen Bremsdruckregelung der einzelnen Radbremsen wird in einem vorteilhaften Ausführungsbeispiel anstelle der individuellen Rad-bremsenregelung die Regelung der Bremsdrücke einer Achse vorgenommen. Ferner kann in anderen vorteilhaften Ausführungsbeispielen vorgesehen sein, anstelle einer Bremsdruckregelung eine Regelung des Bremsmoments, der Bremswirkung, des elektrischen Stromes, der Stellungen der Bremseinrichtungen, der Fahrzeugverzögerung, etc. vorzunehmen. In diesem Fall wird anstelle der Sollbremsdrücke die Sollwerte des entsprechenden Parameters vom Zentralmodul ermittelt und an die Bremsmodule übertragen bzw. im Notlauf von einem Bremsmodul ermittelt.

Neben der gezeigten Anordnung, bei welcher die Pedalsensoreinheit mit dem Bremsmodul 2a verbunden ist, kann in anderen vorteilhaften Ausführungsbeispielen eine Verbindung zum Bremsmodul 2b oder zu beiden Bremsmodulen vorgesehen sein. Im ersten Fall wird die gezeigte Notlaufstrategie im Rahmen des Moduls 2b durchgeführt, während im letzteren Fall bei Ausfall des Kommunikationsystems eine pedalsbetätigungsabhängige Regelung auch der Hinterachsbremsen ermöglicht ist.

In einem bevorzugten Ausführungsbeispiel sind die bremsmodul direkt im Bereich der Radbremsen oder der Achsen als eigene Steuergeräte angebracht. Das Zentralmodul ist dabei von den Bremsmodulen örtlich getrennt und kann neben der Bremsfunktion auch andere Funktionen wie Motorsteuerung, Getriebesteuerung, etc. durchführen. In einem anderen vorteilhaften Ausführungsbeispiel sind die Module in einem zentralen Steuergerät zusammengefaßt.

In einem weiteren vorteilhaften Ausführungsbeispiel werden die Drucksollwerte im Bremsmodul 2a aus der Fahrervorgabe und gegebenenfalls anderen, über das Kommunikationssystem und/oder direkt zugeführten Betriebsgrößen errechnet und über das Kommunikationssystem an die anderen Elemente übermittelt. Ferner kann anstelle der hydraulischen Bremsanlage eine pneumatische oder eine rein elektrische Bremsanlage vorgesehen sein, bei denen die erfindungsgemäße Notlausstrategie Verwendung findet.

## Patentansprüche

1. Elektronisches Bremssystem,
- bei dem ein Zentralmodul (1) und den Rädern oder Radgruppen zugeordnete Bremsmodule (2a, 2b) vorgesehen sind,
- bei dem die Bremsmodule (2a, 2b) über ein Kommunikationssystem (3) mit dem Zentralmodul (1) verbunden sind, die hierüber Sensorsignale zum Zentralmodul (1) schicken und vom Zentralmodul (1) Sollwerte erhalten,
- und bei dem die Bremsmodule (2a, 2b) mittels den Rädern zugeordneten elektrisch betätigbaren Aktuatoren (4a, 4b, 4c, 4d) die Sollwerte einstellen,
dadurch gekennzeichnet, daß
- einem Bremsmodul (2a) wenigstens eine Meßeinrichtung (5) zur Erfassung der Vorgabe des Fahrers durch das Bremspedal (7) zugeordnet ist,
- dieses Bremsmodul die Sollwerte wenigstens bei Ausfall des Zentralmoduls (1) in Abhängigkeit dieser Vorgabe für alle Radbremsen berechnet und die Sollwerte den entsprechenden Bremsmodulen über das Kommunikationssystem zuleitet.

2. Bremssystem nach Anspruch 1, dadurch gekennzeichnet, daß das Bremspedal zusätzlich als Druckerzeuger ausgebildet ist und mit den Bremsen wenigstens eines Bremskreises über eine Umschalteinheit verbindbar ist, wobei bei Ausfall des Bremsmoduls der dem Modul zugeordnete Bremskreis mit dem vom Bremspedal betätigbaren Druckerzeuger verbindbar ist.

3. Bremssystem nach Anspruch 1, dadurch gekennzeichnet, daß das Bremsmodul mit dem Bremspedalsensor verbunden ist und den Sensorwert an das Zentralmodul zur Berechnung der Sollwerte weiterleitet.

4. Bremssystem nach Anspruch 1, dadurch gekennzeichnet, daß bei Ausfall des Kommunikationssystems das Bremsmodul die Sollwerte für die zugeordneten Räder bzw. Radgruppen ermittelt und einstellt.

5. Bremssystem nach Anspruch 1, dadurch gekennzeichnet, daß die Sollwerte die Solldrücke in den Radbremsen oder Radbremsgruppen, ein Maß für das Bremsmoment, ein Maß für den elektrischen Strom oder die Stellung eines Elementes der Radbremsen ist.

6. Bremssystem nach Anspruch 2, dadurch gekennzeichnet, daß bei Ausfall des Pedalsensors die Umschalteinheit betätigt wird.

7. Bremssystem nach Anspruch 1, dadurch gekennzeichnet, daß das Bremsmodul den Vorderachsbremsen zugeordnet ist.

8. Bremssystem nach Anspruch 1, dadurch gekennzeichnet, daß ein weiteres Bremsmodul den Hinterachsbremsen zugeordnet ist, welches bei Ausfall abgeschaltet wird, bei Ausfall des Vorderachsbremsmoduls, bei Fehler in der Pedalsensorik sowie bei Ausfall des Zentralmoduls seine Funktion aufrechterhält.

9. Bremssystem nach Anspruch 1, dadurch gekennzeichnet, daß bei Ausfall der Pedalsensorik das Zentralmodul auf der Basis der Istwerte im druckgesteuerten Bremskreis die Sollwerte für den anderen Bremskreis ermittelt.

## Claims

1. Electronic braking system,
- in which a central module (1) and braking modules (2a, 2b) which are allocated to the wheels or wheel groups are provided,
- in which the braking modules (2a, 2b) are connected via a communications system (3) to the central module (1), send via this communications system (3) sensor signals to the central module (1) and receive nominal values from the central module (1) via the said communications system,
- and in which the braking modules (2a, 2b) set the nominal values by means of electrically operable actuators (4a, 4b, 4c, 4d) which are allocated to the wheels,
characterized in that
- one braking module (2a) is allocated at least one measuring device (5) for detecting the driver's demand by means of the brake pedal (7),
- at least in the event of failure of the central module (1), this braking module calculates the nominal values as a function of this demand for all the wheel brakes and passes the nominal values to the corresponding braking modules via the communications system.

2. Braking system according to Claim 1, characterized in that the brake pedal is also designed as a pressure generator and can be connected to the brakes of at least one brake circuit via a changeover unit, in which case, in the event of failure of the braking module, the brake circuit which is allocated to that module can be connected to the pressure generator, which can be operated by the brake pedal.

3. Braking system according to Claim 1, characterized in that the braking module is connected to the brake pedal sensor and passes on the sensor value to the central module, in order to calculate the nominal values.

4. Braking system according to Claim 1, characterized in that, in the event of failure of the communications system, the braking module determines and sets the nominal values for the associated wheels or wheel groups.

5. Braking system according to Claim 1, characterized in that the nominal values are the nominal pressures in the wheel brakes or wheel brake groups, a measure for the braking torque, a measure for the electrical current or the position of an element of the wheel brakes.

6. Braking system according to Claim 2, characterized in that, in the event of failure of the pedal sensor, the changeover unit is operated.

7. Braking system according to Claim 1, characterized In that the braking module is allocated to the front axle brakes.

8. Braking system according to Claim 1, characterized in that a further braking module is allocated to the rear axle brakes, is switched off in the event of failure, but maintains its function in the event of failure of the front axle braking module, in the event of faults in the pedal sensor system and the event of failure of the central module.

9. Braking system according to Claim 1, characterized in that, in the event of failure of the pedal sensor system, the central module uses the actual values in the pressure-controlled brake circuit to determine the nominal values for the other brake circuit.

## Revendications

1. Système de frein électronique comprenant :
- un module central (1) et des modules de frein (2a, 2b) associés aux roues ou aux groupes de roues,
- les modules de frein (2a, 2b) étant reliés par un système de communication (3) au module central (1), pour transmettre des signaux de capteur au module central (1) et recevoir des valeurs de consigne du module central (1), et
- les modules de frein (2a, 2b) règlent des valeurs de consigne en fonction des actionneurs (4a, 4b, 4c, 4d) associés aux roues et actionnés électriquement, ,
caractérisé en ce que
- au moins une installation de mesure (5) est associée à un module de frein (2a) pour détecter l'information prédéterminée du conducteur par la pédale de frein (7),
- ce module de frein calcule les valeurs de consigne au moins en cas de défaillance du module central (1) en fonction de cette information prédéterminée pour tous les freins de roue et applique les valeurs de consigne au module de frein correspondant par l'intermédiaire du système de communication.

2. Système de frein selon la revendication 1,
caractérisé en ce que
la pédale de frein est en outre réalisée comme générateur de pression et au moins un circuit de frein peut être relié aux freins par une unité de commutation, et en cas de défaillance du module de frein, le circuit de frein associé au module peut être relié au générateur de pression actionné par la pédale de frein.

3. Système de frein selon la revendication 1,
caractérisé en ce que
le module de frein est relié au capteur de pédale de frein et il transmet la valeur fournie par le capteur au module central pour calculer les valeurs de consigne.

4. Système de frein selon la revendication 1,
caractérisé en ce qu'
en cas de défaillance du système de communication, le module de frein détermine les valeurs de consigne des roues ou groupes de roues associés et les règle.

5. Système de frein selon la revendication 1,
caractérisé en ce que
les valeurs de consigne sont les pressions de consigne des freins de roues des groupes de freins de roues, une mesure du couple de freinage, une mesure du courant électrique ou la position d'un élément des freins de roues.

6. Système de frein selon la revendication 2,
caractérisé en ce qu'
en cas de défaillance du capteur de pédale, cela actionne l'unité de commutation.

7. Système de frein selon la revendication 1,
caractérisé en ce que
le module de frein est associé aux freins de l'essieu avant.

8. Système de frein selon la revendication 1,
caractérisé en ce qu'
un autre module de frein est associé aux freins de l'essieu arrière qui est coupé en cas de défaillance et maintient son fonctionnement en cas de défaillance du module des freins de l'essieu avant, de défaut des capteurs de la pédale ou de défaillance du module central.

9. Système de frein selon la revendication 1,
caractérisé en ce qu'
en cas de défaillance des capteurs de la pédale, le module central détermine les valeurs de consigne pour l'autre circuit de frein à partir des valeurs réelles du circuit de frein commandé en pression.
